# EUROPÄISCHE PATENTSCHRIFT

(11) **EP 0 575 872 B1**
(45) Veröffentlichungstag und Bekanntmachung des Hinweises auf die Patenterteilung: **22.05.1996**
(21) Anmeldenummer: 93109566.5
(22) Anmeldetag: 16.06.1993
(51) Int. Cl.: C08F 12/08, C08J 9/20

(54) **Verfahren zur Herstellung von perlförmigen expandierbaren Styrolpolymerisaten**
Process for producing pearl-shaped expandable styrene polymers
Procédé de préparation de perles de polymères styréniques expansibles

(30) Priorität: 20.06.1992 DE 4220225
(43) Veröffentlichungstag der Anmeldung: 29.12.1993
(73) Patentinhaber: BASF Aktiengesellschaft, D-67063 Ludwigshafen (DE)
(72) Erfinder: Witt, Michael, Dr., W-6700 Ludwigshafen (DE); Walter, Manfred, Dr., W-6720 Speyer (DE)

(56) Entgegenhaltungen:
- DE-A- 2 510 937
- US-A- 2 673 194

## Beschreibung

Die Erfindung betrifft ein Verfahren zur Herstellung perlförmiger expandierbarer Styrolpolymerisate (EPS) durch Polymerisation von Styrol gegebenenfalls unter Mitverwendung weiterer Comonomerer in wäßriger Suspension in Gegenwart eines speziellen Suspensionsstabilisators.

Schaumstoffe auf Basis von Styrolpolymerisaten haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Die Suspensionspolymerisation erfolgt hierbei in Gegenwart von Suspensionsstabilisatoren und üblicher styrollöslicher Polymerisationskatalysatoren.

Als Suspensionsstabilisatoren werden hierbei üblicherweise neben Molekülkolloiden wie Polyvinylalkohol (PVA) und Polyvinylpyrrolidon (PVP) schwerlösliche Salze wie Ca₃(PO₄)₂ (sogenannte Pickering-Salze) in Kombination mit einem Extender wie Dodecylbenzolsulfonat eingesetzt.

Unter Extender werden hierbei Verbindungen verstanden, welche die Fähigkeit der schwerlöslichen anorganischen Verbindungen, Suspensionen zu stabilisieren, erhöhen. Die Extender bewirken eine teilweise Hydrophobierung des an sich hydrophilen anorganischen Pickering-Salzes. Dieses wird somit gezielt in die Oberfläche der polymerisierenden Styroltröpfchen gezwungen.

Aus der DE-A 25 10 937 ist ein Verfahren zur Herstellung expandierbarer Polystyrolpartikel durch Suspensionspolymerisation von Styrol und gegebenenfalls anderer Comonomerer in Gegenwart organischer Suspensionsstabilisatoren wie Polyvinylpyrrolidon bekannt, wobei die Polymerisation in Gegenwart von 0,001 bis 0,4 Gew.-%, bezogen auf die wäßrige Phase, an Phosphaten und/oder Carbonaten des Calciums und/oder Magnesiums ausgeführt wird, durch die der Innenwassergehalt der Perlen reduziert werden soll. In einer Ausführungsform des Verfahrens wird während der Suspensionspolymerisation beispielsweise Magnesiumpyrophosphat aus den löslichen Komponenten gebildet.

In der US-A 3,755,282 ist die Suspensionspolymerisation von vinylaromatischen Monomeren in Anwesenheit von 0,2 bis 1 Gew.-%, bezogen auf das Monomere, eines Phosphatsuspensionsmittels (beispielsweise Magnesiumphosphat) und einer α,β-ungesättigten Carbonsäure als einzigem Extender beschrieben. Als Beispiele für die α,β-ungesättigte Carbonsäure sind u.a. Acrylsäure, Methacrylsäure, Crotonsäure, Maleinsäure und Fumarsäure genannt. Es wurden große, nahezu sphärische Perlen mit einer geringen Perlgrößenverteilung erhalten. Bei der Verwendung eines Stabilisatorsystems aus Tricalciumphosphat und Natriumdodecylbenzolsulfonat wurden dagegen kleine Polymerperlen mit einer breiten Perlgrößenverteilung erhalten.

Die Verwendung von Pickering-Salzen als Suspensionsstabilisatoren bei der Suspensionspolymerisation hat den Vorteil, daß die Aufbereitung des Abwassers einfach und kostengünstig erfolgen kann. So ist es im allgemeinen möglich, durch einfache Sedimentationsprozesse das Abwasser von einem Großteil seiner organischen Belastung zu reinigen.

Bei Verwendung der Pickering-Salze in einer Suspensionspolymerisation ergeben sich jedoch einige Nachteile. Die Suspensionspolymerisation erweist sich im Hinblick auf die Menge an gebildetem feinteiligem Polymerisat (Emulsionspolymerisat), die erzielte mittlere Partikelgröße, die Teilchengrößenverteilung und die Stabilität des Polymerisationsansatzes hinsichtlich Koagulation in der Regel als sehr empfindlich gegenüber Verunreinigungen, insbesondere mit oberflächenaktiven Substanzen.

Dies bedeutet, daß die Suspensionspolymerisation auch sehr empfindlich auf die Menge an eingesetztem Extender reagiert.

Damit sind aber auch der Wiederverwendung von bei der EPS-Herstellung anfallenden unverkäuflichen Randfraktionen sowie der Verwendung von Recyclat enge Grenzen gesetzt. Insbesondere kann das im Abwasser enthaltene Emulsionspolymerisat nach der Abtrennung nicht wieder im Styrol aufgelöst werden.

Außerdem resultieren rein hydrophobe Teilchenoberflächen, so daß derartige expandierbare Styrolpolymerisate zu starken elektrostatischen Aufladungen neigen.

Beim Schäumen mit Wasserdampf weisen derartige hydrophobe Perlen im Vergleich zu Perlen, die in Gegenwart eines Molekülkolloids hergestellt wurden, bei vergleichbarer Molekulargewichtsverteilung im allgemeinen eine geringere Expandierbarkeit auf.

Aufgabe der vorliegenden Erfindung war es daher, ein Verfahren zur Herstellung von perlförmigen expandierbaren Styrolpolymerisaten bereitzustellen, das die geschilderten Nachteile nicht hat.

Es wurde gefunden, daß diese Aufgabe überraschend durch Verwendung eines speziellen Suspensionsstabilisatorsystems gelöst wird, das Magnesiumpyrophosphat enthält.

Gegenstand der Erfindung ist somit ein Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz von 1 bis 10 Gew.-% eines C₃- bis C₇-Kohlenwasserstoffs und/oder Kohlendioxid als Treibmittel und gegebenenfalls üblicher Zusatzstoffe in wirksamen Mengen, wobei man als Suspensionsstabilisator eine Mischung aus Magnesiumpyrophosphat, einem Sulfonatgruppen enthaltenden Extender und einem Alkali- oder Erdalkali-Carboxylat verwendet, wobei das Magnesiumpyrophosphat unmittelbar vor der Polymerisation durch Vereinigung einer wäßrigen Lösung eines Alkalipyrophosphats mit mindestens der stöchiometrisch erforderlichen Menge eines Magnesiumsalzes hergestellt wird.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Im erfindungsgemäßen Verfahren kommen daher als Comonomere z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Im erfindungsgemäßen Verfahren werden als Treibmittel 1 bis 10 Gew.-%, vorzugsweise 3 bis 8 Gew.-%, eines C₃- bis C₇-Kohlenwasserstoffs (wie Propan, Butan, Isobutan, n-Pentan, i-Pentan, Neopentan und/oder Hexan) und/oder Kohlendioxid eingesetzt.

Bei Verwendung von Kohlendioxid als Treibmittel oder Treibmittelbestandteil wird in vorteilhafter Weise ein Kohlendioxid-Absorber gemäß der deutschen Patentanmeldung P 41 37 405.3 eingesetzt.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die erfindungsgemäß hergestellten expandierbaren Styrolpolymerisate aufgebracht.

Die Suspensionspolymerisation von Styrol ist an sich bekannt. Sie ist ausführlich beschrieben im Kunststoff-Handbuch, Band V, "Polystyrol", Carl Hanser-Verlag, 1969, Seiten 679 bis 688. Dabei wird im allgemeinen Styrol, ggf. zusammen mit den oben genannten Comonomeren, in Wasser suspendiert, wobei organische oder anorganische Suspensionsstabilisatoren zugesetzt werden.

Im erfindungsgemäßen Verfahren werden perlförmige expandierbare Styrolpolymerisate hergestellt durch Polymerisation von Styrol, ggf. zusammen mit bis zu 50 Gew.-% der obengenannten Comonomeren, in wäßriger Suspension, wobei vor, während oder nach der Polymerisation die oben beschriebenen Treibmittel und gegebenenfalls übliche Zusatzstoffe in wirksamen Mengen zugesetzt werden.

Man kann die Polymerisation auch in Gegenwart eines üblichen Kettenüberträgers ausführen, der das Molekulargewicht regelt. Vorzugsweise wird tert.-Dodecylmercaptan oder DMS (dimeres α-Methylstyrol) verwendet. Der Regler wird im allgemeinen in einer Menge von 0,0001 bis 0,01 Gew.-%, bezogen auf Styrol, verwendet.

Für das erfindungsgemäße Verfahren wesentlich ist die Verwendung einer Mischung aus Magnesiumpyrophosphat, einem Sulfonatgruppen enthaltenden Extender und einem Alkali- oder Erdalkali-Carboxylat als Suspensionsstabilisator. Wenn im erfindungsgemäßen Verfahren beispielsweise kein Carboxylat verwendet wird, resultiert eine verminderte Stabilität des Suspensionspolymerisationsansatzes in Hinblick auf Koagulation. Darüber hinaus wird ein erhöhter Innenwassergehalt in den EPS-Perlen und eine Verschlechterung des Kesselzustandes durch Anwachsungen festgestellt.

Bei der Weiterverarbeitung der nach dem erfindungsgemäßen Verfahren hergestellten expandierbaren Styrolpolymerisate zeigt sich überraschenderweise, daß beim Verzicht auf das Carboxylat der Durchsatz beim kontinuierlichen Vorschäumen in der Regel um 30 % abnimmt und der Oberflächenwiderstand von daraus hergestellten Formteilen in der Regel um mindestens eine Zehnerpotenz erhöht ist.

Im erfindungsgemäßen Verfahren wird Magnesiumpyrophosphat in der Regel zu Polymerisationsbeginn vorgelegt und im allgemeinen in einer Konzentration zwischen 0,03 und 2,0, vorzugsweise zwischen 0,05 und 0,5 und besonders bevorzugt zwischen 0,1 und 0,2 Gew.-%, bezogen auf die wäßrige Phase, eingesetzt.

Das erfindungsgemäß einzusetzende Magnesiumpyrophosphat wird unmittelbar vor der Polymerisation durch Vereinigung einer wäßrigen Lösung eines Alkalipyrophosphats mit mindestens der stöchiometrisch erforderlichen Menge eines Magnesiumsalzes hergestellt, wobei das Magnesiumsalz in fester Form oder in wäßriger Lösung vorliegen kann.

In einer bevorzugten Ausführungsform wird das Magnesiumpyrophosphat durch Vereinigung wäßriger Lösungen von Natriumpyrophosphat (Na₄P₂O₇) und Magnesiumsulfat (MgSO₄ · 7 H₂O) hergestellt.

Vorzugsweise wird die Bildung von Magnesiumpyrophosphat unter Vorlage von gelöstem Na₄P₂O₇ und anschließender Zugabe einer MgSO₄ · 7H₂O-Lösung durchgeführt. Das Magnesiumsalz wird in mindestens der stöchiometrisch erforderlichen Menge, vorzugsweise in stöchiometrischer Menge, zugegeben. Für das erfindungsgemäße Verfahren ist wesentlich, daß kein Überschuß an Alkalipyrophosphat vorliegt.

In einer bevorzugten Ausführungsform des erfindungsgemäßen Verfahrens wird Magnesiumpyrophosphat nicht in Gegenwart der gesamten Menge an wäßriger Phase der anschließenden Suspensionspolymerisation hergestellt. Die Verwendung von weniger als der Hälfte des zur Suspensionspolymerisation eingesetzten Wassers hat sich als besonders vorteilhaft herausgestellt. Beispielsweise kann zu einer 3 gew.-%igen Na₄P₂O₇-Lösung eine 20 gew.-%ige MgSO₄ · 7 H₂O-Lösung zugegeben werden.

Im erfindungsgemäßen Verfahren werden Sulfonatgruppen enthaltende Extender eingesetzt. Zu diesen Extendern gehören beispielsweise Natriumdodecylbenzolsulfonat, langkettige Alkylsulfonate, Vinylsulfonat, Diisobutylnaphthalinsulfonat.

Als Extender werden erfindungsgemäß bevorzugt Alkalisalze der Dodecylbenzolsulfonsäure und/oder Alkalisalze eines Gemisches von C₁₂-C₁₇-Alkylsulfonsäuren eingesetzt. Ein besonders geeignetes Gemisch von C₁₂-C₁₇-Alkylsulfonaten besteht aus überwiegend sekundären Natriumalkylsulfonaten mit der mittleren Kettenlänge C₁₅, das bis zu 0,2 Gew.-% organisch gebundenes Chlor enthält. Ein derartiges Gemisch wird unter der Bezeichnung Mersolat® K 30 von der Firma Bayer AG vertrieben.

Die Extender werden in der Regel in Mengen zwischen 0,5 und 15, vorzugsweise 2 bis 10 Gew.-%, bezogen auf Magnesiumpyrophosphat, eingesetzt.

Im erfindungsgemäßen Verfahren ist die Verwendung eines Alkali- oder Erdalkali-Carboxylats wesentlich. Das Carboxylat hat vorzugsweise mindestens eine olefinische Doppelbindung. Erfindungsgemäß besonders geeignete Carboxylate sind die Alkalisalze der Acrylsäure, Methacrylsäure und Sorbinsäure.

Ganz besonders bevorzugt wird Natrium- bzw. Kalium-Acrylat eingesetzt.

Das Carboxylat wird in der Regel in einer Menge zwischen 0,005 und 0,5, vorzugsweise 0,01 bis 0,1 und besonders bevorzugt 0,02 bis 0,05 Gew.-%, bezogen auf die wäßrige Phase, eingesetzt.

Die angegebenen Vorzugsbereiche für die Konzentrationen an Magnesiumpyrophosphat, Sulfonatgruppen enthaltendem Extender und Carboxylat beinhalten geringfügige Verbesserungen. Es ist allerdings gerade der besondere Vorteil des erfindungsgemäßen Verfahrens, daß sich die Suspensionspolymerisation relativ unempfindlich gegenüber Variationen in der Konzentration dieser Stoffe sowie von Verunreinigungen zeigt.

Das erfindungsgemäße Verfahren wird bevorzugt unter Verwendung eines Strombrechers durchgeführt.

In einer besonders bevorzugten Ausführungsform des erfindungsgemäßen Verfahrens wird die Dosierung des Extenders so durchgeführt, daß nach bestimmten Polymerisationszeiten ein Gemisch des Extenders zusammen mit dem Alkaliacrylat zudosiert wird.

Durch Anpassung der Dosierzeiten kann der gewünschte Perldurchmesser d' in weiten Bereichen gezielt eingestellt werden (beispielsweise im Bereich von 0,5 bis 3 mm).

Der mittlere Perldurchmesser d' wird hierbei nach Rosin-Rammler-Sperling-Bennett gemäß DIN 66 145 bestimmt.

Von besonderem Vorteil beim erfindungsgemäßen Verfahren ist hierbei, daß der d'-Wert in weiten Grenzen weder von der Menge an Magnesiumpyrophosphat noch der Extender-Menge beeinflußt wird.

Das erfindungsgemäße Verfahren eignet sich insbesondere auch bei Verwendung von Recyclat. Die Möglichkeiten der Verwendung von arteigenem Wiederauflösematerial können durch eine Flüssig-Flüssig-Extraktion des in Styrol gelösten Auflösematerials mit Wasser wesentlich erweitert werden. Das Auflösematerial kann damit in konzentrierten Lösungen (in der Regel bis zu ca. 40 Gew.-% der organischen Phase) eingesetzt werden.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die vorgeschäumten Teilchen können dann nach üblichen Verfahren zu Schaum-Formteilen mit einer Dichte von 0,005 bis 0,1 g/cm³ ausgeschäumt werden.

Das erfindungsgemäße Verfahren weist zahlreiche Vorteile auf. Es werden sehr stabile Polymerisationsansätze erhalten. Die Teilchendurchmesser der expandierbaren perlförmigen Styrolpolymerisate lassen sich gut und präzise steuern. Die treibmittelhaltigen expandierbaren Perlpolymerisate weisen niedrige Innenwassergehalte, ein hohes Expandiervermögen und gute und konstante Verarbeitungseigenschaften auf. Überdies ist die Neigung zur elektrostatischen Aufladung geringer.

Es ist außerdem möglich, verschiedene organische Monomerphasen ohne neue Abstimmung des Stabilisatorsystems einzusetzen (z.B. für flammgeschützte und nicht-flammgeschützte Marken).

Das im erfindungsgemäßen Verfahren entstehende Emulsionspolymerisat kann durch einfache Sedimentationsprozesse abgetrennt werden. Eine zusätzliche biologische Klärung ist problemlos möglich. Außerdem ist bei der Aufarbeitung des Produktes keine Säurewäsche oder sonstige umständliche Waschoperation erforderlich.

Die besondere Umweltfreundlichkeit des erfindungsgemäßen Verfahrens ergibt sich auch daraus, daß der Sulfonatgruppen enthaltende Extender im Gegensatz zu einem Molekülkolloid wie Polyvinylpyrrolidon in sehr geringen Mengen eingesetzt werden kann. Verglichen mit der üblicherweise eingesetzten Menge an Polyvinylpyrrolidon kann beim erfindungsgemäßen Verfahren der Extender in einer Menge von weniger als dem zwanzigsten Teil hiervon genügen.

Ergänzend sei auch auf den Vorteil der niedrigen Stabilisatorkosten hingewiesen.

Die in den Beispielen genannten Teile und Prozente beziehen sich auf das Gewicht.

### Beispiele

931,8 g Na₄P₂O₇ wurden in 32 l Wasser bei Raumtemperatur gelöst. Unter Rühren wurde zu dieser Lösung eine Lösung von 1728 g MgSO₄ · 7H₂O in 8 l Wasser gegeben und anschließend für weitere 5 Minuten gerührt.

In einem druckfesten Rührkessel wurden 480 l Wasser vorgelegt und unter Rühren die Mg₂P₂O₇-Suspension zugefügt. Anschließend wurden 500 l Styrol zusammen mit 1,15 kg tert.-Butylperbenzoat und 0,5 kg Dibenzoylperoxid zugegeben. Der Rührkessel wurde verschlossen, ein Stickstoffdruck von 1 bar eingestellt, und in 2 Stunden auf 90°C erhitzt. Anschließend wurde die Mischung in 5 Stunden auf 125°C erhitzt und 5 Stunden bei 125°C gehalten. 2 Stunden nach Erreichen einer Temperatur von 80°C wurden 4,7 kg einer 1%igen wäßrigen Lösung von Mersolat® K30 zusammen mit 1,3 kg einer 10%igen wäßrigen Natriumacrylat-Lösung hinzugefügt. 170 Minuten nach Erreichen einer Temperatur von 80°C wurden 37 kg Pentan zugefügt.

Nach dem Abkühlen wurde das erhaltene Perlpolymerisat von der wäßrigen Phase abgetrennt, gewaschen, oberflächengetrocknet und der Innenwassergehalt nach der Methode von Karl Fischer bestimmt. Der mittlere Perldurchmesser d' und die Verteilungsbreite β wurden nach Rosin-Rammler-Sperling-Bennett gemäß DIN 66 145 bestimmt.

100 Teile des expandierbaren Polystyrol-Granulates mit der Perlgrößenfraktion zwischen 0,7 und 1,0 mm Durchmesser wurden durch Auftrommeln im Schaufelmischer jeweils während 4 Minuten mit 0,4 Teilen Glycerinmonostearat beschichtet.

Ein Teil der beschichteten EPS-Perlen wurde in einem diskontinuierlichen Vorschäumer Typ Rauscher 6 Minuten mit strömendem Wasserdampf behandelt und die Schüttdichte bestimmt.

Ein weiterer Teil der beschichteten EPS-Perlen wurde in einem kontinuierlichen Rührvorschäumer, Typ Rauscher, mit strömendem Wasserdampf auf ein Schüttgewicht von 20 g/l vorgeschäumt und der Durchsatz (in kg/h) bestimmt.

Die im diskontinuierlichen Vorschäumer, Typ Rauscher, erhaltenen vorgeschäumten Perlen wurden nach einer Zwischenlagerung von 24 h zu einem quaderförmigen Schaumstoffkörper ausgeschäumt. An diesen Schaumstoffkörpern wurde der Oberflächenwiderstand R_{OA} nach DIN 53 482 bei 50 % Luftfeuchtigkeit bestimmt.

Die Bestimmung der Viskositätszahl VZ (0,5 %ig bei 25°C in Toluol) erfolgte nach DIN 53 726.

### Vergleichsbeispiel

Es wurde wie im Beispiel verfahren, jedoch ohne Zugabe von Natriumacrylat.

Die für das Beispiel und das Vergleichsbeispiel erhaltenen Ergebnisse sind in der Tabelle zusammengefaßt.

**Tabelle**

| | Beispiel | Vergleichsbeispiel |
|---|---|---|
| Mittlerer Perldurchmesser d'/mm | 0,86 | 0,92 |
| Verteilungsbreite β | 17,1 | 17,4 |
| VZ | 75,2 | 76,0 |
| Innenwassergehalt (0,7-1 mm)/Gew.-% | 0,38 | 0,89 |
| Pentangehalt/Gew.-% | 6,08 | 6,10 |
| Schüttdichte nach 6 min / g/l | 12,2 | 15,6 |
| Durchsatz / kg/h | 227 | 169 |
| Oberflächenwiderstand R_{OA} / Ω | < 10¹¹ | > 10¹ |

## Patentansprüche

1. Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz von 1 bis 10 Gew.-% eines C₃- bis C₇-Kohlenwasserstoffs und/oder Kohlendioxid als Treibmittel und gegebenenfalls üblicher Zusatzstoffe in wirksamen Mengen, dadurch gekennzeichnet, daß man als Suspensionsstabilisator eine Mischung aus Magnesiumpyrophosphat, einem Sulfonatgruppen enthaltenden Extender und einem Alkali- oder Erdalkali-Carboxylat verwendet, wobei das Magnesiumpyrophosphat unmittelbar vor der Polymerisation durch Vereinigung einer wäßrigen Lösung eines Alkalipyrophosphats mit mindestens der stöchiometrisch erforderlichen Menge eines Magnesiumsalzes hergestellt wird.

2. Verfahren nach Anspruch 1, dadurch gekennzeichnet, daß Magnesiumpyrophosphat in einer Konzentration von 0,03 bis 2,0 Gew.-%, bezogen auf die wäßrige Phase, eingesetzt wird.

3. Verfahren nach Anspruch 1 oder 2, dadurch gekennzeichnet, daß als Extender Alkalisalze eines Gemisches von C₁₂-C₁₇-Alkylsulfonsäuren eingesetzt werden.

4. Verfahren nach einem der Ansprüche 1 oder 2, dadurch gekennzeichnet, daß als Extender ein Alkalisalz der Dodecylbenzolsulfonsäure eingesetzt wird.

5. Verfahren nach einem der Ansprüche 1 bis 4, dadurch gekennzeichnet, daß ein Carboxylat mit mindestens einer olefinischen Doppelbindung eingesetzt wird.

6. Verfahren nach Anspruch 5, dadurch gekennzeichnet, daß ein Acrylat eingesetzt wird.

## Claims

1. A process for the preparation of bead-form, expandable styrene polymers by polymerizing styrene, in the presence or absence of further comonomers, in aqueous suspension in the presence of suspension stabilizers and conventional styrene-soluble polymerization catalysts and with addition of from 1 to 10% by weight of a C₃- to C₇-hydrocarbon and/or carbon dioxide as blowing agent and, if desired, conventional additives in effective amounts, which comprises using, as suspension stabilizer, a mixture of magnesium pyrophosphate, a sulfonate group-containing extender and an alkali metal or alkaline earth metal carboxylate, the magnesium pyrophosphate being prepared immediately before the polymerization by combining an aqueous solution of an alkali metal pyrophosphate with at least the stoichiometrically necessary amount of a magnesium salt.

2. A process as claimed in claim 1, wherein magnesium pyrophosphate is employed in a concentration of from 0.03 to 2.0% by weight, based on the aqueous phase.

3. A process as claimed in claim 1 or 2, wherein the extender employed is an alkali metal salt of a mixture of C₁₂-C₁₇-alkylsulfonic acids.

4. A process as claimed in claim 1 or 2, wherein the extender employed is an alkali metal salt of dodecylbenzenesulfonic acid.

5. A process as claimed in claim 1 or 2 or 3 or 4, wherein a carboxylate containing at least one olefinic double bond is employed.

6. A process as claimed in claim 5, wherein an acrylate is employed.

## Revendications

1. Procédé pour la préparation de polymères de styrène expansibles en perles par polymérisation de styrène, éventuellement avec utilisation conjointe d'autres comonomères, en suspension aqueuse en présence de stabilisants de suspension et de catalyseurs de polymérisation classiques solubles dans le styrène et avec addition de 1 à 10 % en poids d'un hydrocarbure en C₃ à C₇ et/ou de dioxyde de carbone comme agent d'expansion et éventuellement d'autres additifs classiques en quantités efficaces, caractérisé en ce qu'on emploie comme stabilisant de suspension un mélange de pyrophosphate de magnésium, d'une charge contenant des groupes sulfonate et d'un carboxylate alcalin ou alcalino-terreux, tandis que le pyrophosphate de magnésium est préparé directement avant la polymérisation par combinaison d'une solution aqueuse d'un pyrophosphate alcalin avec au moins la quantité stoechiométriquement nécessaire d'un sel de magnésium.

2. Procédé selon la revendication 1, caractérisé en ce qu'on emploie du pyrophosphate de magnésium en une concentration de 0,03 à 2,0 % en poids, par rapport à la phase aqueuse.

3. Procédé selon l'une des revendications 1 ou 2, caractérisé en ce qu'on emploie comme charge des sels alcalins d'un mélange d'acides alkyl(C₁₂-C₁₇)sulfoniques.

4. Procédé selon l'une des revendications 1 ou 2, caractérisé en ce qu'on emploie comme charge un sel alcalin d'acide dodécylbenzènesulfonique.

5. Procédé selon l'une quelconque des revendications 1 à 4, caractérisé en ce qu'on emploie un carboxylate ayant au moins une double liaison oléfinique.

6. Procédé selon la revendication 5, caractérisé en ce qu'on emploie un acrylate.
